Europäisches Patentamt

**European Patent Office**

**Office européen des brevets**

(19)

(11) Publication number: **0 141 680**
A2

(12) # EUROPEAN PATENT APPLICATION

(21) Application number: **84307694.4**

(22) Date of filing: **07.11.84**

(51) Int. Cl.⁴: **F 16 L 23/02**

(30) Priority: **08.11.83 AU 2260/83**

(43) Date of publication of application: **15.05.85**
**Bulletin 85/20**

(84) Designated Contracting States: **DE FR GB IT NL SE**

(71) Applicant: **JAMES HARDIE INDUSTRIES LIMITED, 1 Grand Avenue, Camellia New South Wales 2142 (AU)**

(72) Inventor: **Kirton, David Ewen, 201-209 Pacific Highway, North Sydney New South Wales, 2142 (AU)**

(74) Representative: **Rooney, Paul Blaise et al, D.Young & Co. 10 Staple Inn, London WC1V 7RD (GB)**

(54) **Plastics lined pipes.**

(57) The present invention relates to internally lined metal pipes, and specifically to such pipes which include means for sealing the liner of two pipes when the pipes are joined together end-to-end. To this end an outer main pipe (5, 17, 22, 27) is provided with a plastics liner sleeve (7, 28) insertable in the pipe (5, 17, 22, 27) and having a projecting end portion (8) forming a sealing band. An annular flange ring (9, 20, 26) is placed at or adjacent the end (8) and has an inner diameter less than the outer diameter of end 8. A spigot (13, 23, 29) is provided on the flange ring to form a companion sealing band so that one sealing band encircles the other with a sealing ring (14) located between the sealing bands and a gasket seal locatable between abutting flange-rings (9, 20, 26) of end to end pipes.

Many pipes, particularly metal pipes, require to be internally lined. The linings are usually rubber or plastics. In either case the lining is moulded and cured within the pipe or bonded to the inside thereof.

The prior practice is open to objection in several respects. For example, moulding or bonding within the pipe including centrifugal deposit or other placement of lining material involves handling of the pipe itself which is usually heavy by comparison with the lining. It has been proposed to form the lining separately from the pipe and then insert the lining tube in the manner of a long bush; this however, raises a problem as, so far as we are aware, there is no satisfactory way to seal the ends of the lining sections.

There is thus a need for pipe linings of plastics material to be formed separately from the pipe sections they are to line, freely insertable axially into the pipe sections, and effectively sealed at the meeting ends of the pipe-emplaced lining sections.

The invention provides a plastics-lined pipe including means enabling establishment of a seal between the meeting ends of a plurality of the pipes when joined together end-to-end, comprising:

(a)  an outer main pipe,

(b)  a liner sleeve of substantially the same length as said main pipe, which is freely axially insertable into that pipe, and has an end portion which constitutes a sealing band,

(c)  an annular flange-ring emplaced at or adjacent the free

0141680

2

end of said sealing band, the least diameter of said flange-ring being less than the outside diameter of said sleeve,

(d) a cylindrical spigot on said flange-ring constituting a companion sealing band, and so sized and emplaced relative to said liner that one of said sealing bands encircles the other, and

(e) a sealing ring located between said sealing bands; said flange ring having a sealing surface enabling a gasket seal to be established between the flange-ring and the flange-ring of another similar lined pipe.

Examples of the invention are illustrated, more-or-less schematically, in the accompanying drawings, in which :-

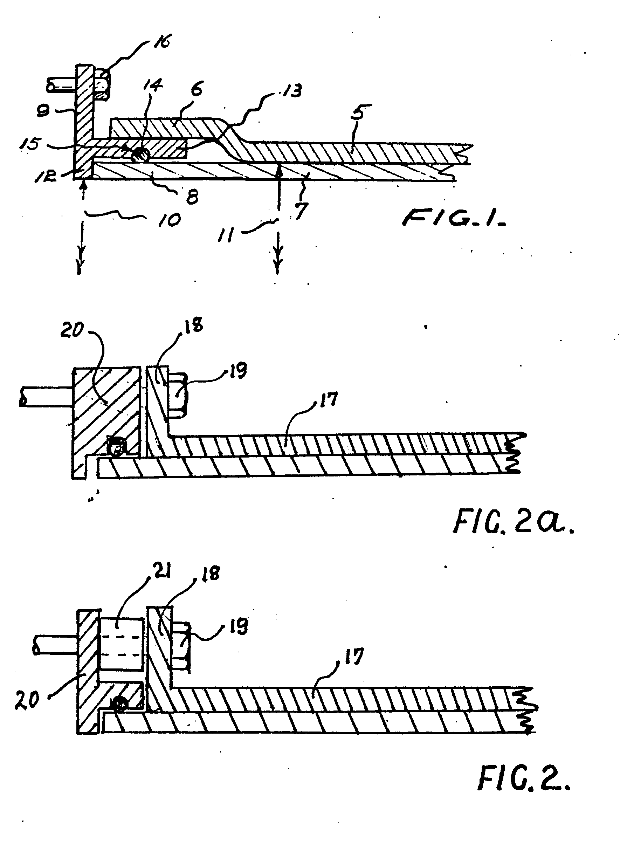

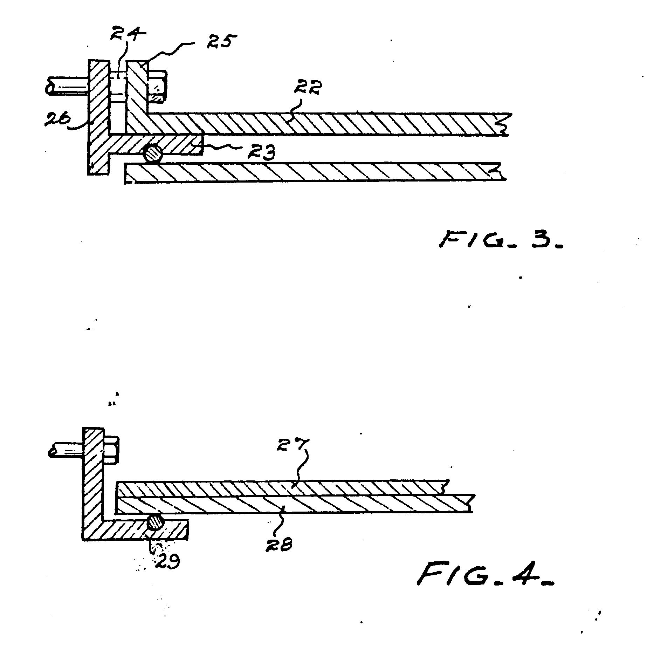

Figs 1 to 4 show four different examples of the invention each in a fragmentary, sectional side-elevation view.

The arrangement shown in Fig. 1 applies to an outer main pipe 5 having an enlarged end portion 6. This is also an arrangement where the main pipe sections in a pipe line are not subject to tensional forces tending to cause the joined sections to part company.

A plastics liner sleeve 7 is of substantially the same length as main pipe 5, and is freely axially insertable thereinto. Liner 7 has an end portion 8 which constitutes a sealing band.

An annular flange-ring 9 has its least diameter (indicated at 10) less than the outside diameter (11) of liner 7. This provides an obstruction 12 to limit endwise movement of liner 7. In this regard it will be appreciated that because the liners are axially movable, axial creep which may well arise in a long pipe-line could, by being cumulative, cause one of the pipe-end seals to fail.

Flange-ring 9 carries a cylindrical spigot 13 which constitutes a companion sealing band relative to band 8 which it encircles. A seal element in the form of an O-ring 14 is located (in groove 15) between sealing bands 8 and 13. Groove 15 could be formed in the band 8 but doing so in a relatively long liner is not preferred as it is simpler to provide such a groove in a moulded ring element such as 9/12/13.

Flange-ring 9 is equipped with any suitable means for clamping it to the flange ring of a similar composite pipe with a gasket or other sealing medium therebetween. These means may consist of rim-clamps or clips or holes able to accept bolts as indicated at 16.

It will be noticed that Fig. 1 is an arrangement in which the liner 7 is fairly close-fitting inside main-pipe 5. This is desirable where, for reasons of internal pressure or otherwise, it is preferred that the liner's freedom for transverse enlargement be limited.

Fig. 2 shows a similar form except for its being one for a main-pipe 17 which is flanged (18) and it is desirable for that flange to be positively included in the joint. Under these circumstances a bolt 19 extends through the flange and the flange-ring 20 is loaded by a spacer tube 21.

Fig. 2a is the same of Fig 2 except that Fig. 2a shows a flange-ring 20 of constant axial thickness, negating the need

4

for spacer tube 21.

Fig. 3 is different from Fig. 2 only in its showing a main-pipe 22 which is large enough to accept spigot 23. Depending on the length of main pipe 22 a spacer tube 24 may be necessary; unless, of course, flange 25 is able to back firmly against flange-ring 26.

In Fig. 4 both the main pipe 27 and the liner 28 are able to encircle the spigot 29.

It is envisaged that a sealing ring of the type used in Victavlic joints may be seated against an outwardly directed peripheral surface of the flange-ring. when secured by a suitable collar, the ring effects the sealing of the pipe to another similar pipe. The collar may also be used to axially restrain the pipes.

5

CLAIMS:

1.      A plastics lined pipe characterised by including means enabling establishment of a seal between the meeting ends of a plurality of the pipes when joined together end-to-end, comprising:

(a) an outer main pipe (5, 17, 22, 27),

(b) a liner sleeve (7, 28) of substantially the same length as said main pipe (5, 17, 22, 27) which is freely axially insertable into that pipe (5, 17,22, 27), and has an end portion (8) which constitutes a sealing band,

(c) an annular flange-ring (9, 20, 26) emplaced at or adjacent the free end of said sealing band, the least diameter (10) of said flange-ring (9, 20) being less than the outside diameter (11) of said sleeve (7, 28),

(d) a cylindrical spigot (13, 23, 29) on said flange-ring (9, 20, 26) constituting a companion sealing band, and so sized and emplaced relative to said liner sleeve (7, 28), that one of said sealing bands encircles the other, and

(e) a sealing ring (14) located between said sealing bands; said flange-ring (9, 20, 26) having a sealing surface enabling a gasket seal to be established between the flange-ring (9, 20, 26) and the flange-ring of another similar lined pipe.

2.      A plastics lined pipe according to claim 1, wherein said outer main pipe (5) includes an enlarged socket (6) on at least one end thereof, and said cylindrical spigot (13) is interposed between said socket (6) and said liner sleeve (7).

3.      A plastics lined pipe according to claim 2, wherein each of a plurality of axially extending holes project through said flange-ring (9, 25), each such as to accept a bolt (16, 19) for joining the pipe to another like pipe.

4. A plastics lined pipe according to claim 1, wherein said main pipe (17) includes an outwardly radially projecting end flange (18), said liner sleeve (7) projects beyond said end-flange (18) and said cylindrical spigot (20) encircles the projecting liner sleeve (7).

5. A plastics lined pipe according to claim 4, wherein each of a plurality of axially extending holes projects through said flange-ring (9) and said end-flange (18) each to accept a bolt (19) for joining the pipe to another like pipe.

6. A plastics lined pipe according to claim 5, wherein each said bolt (19) has a spacer sleeved (21) on it extending from the flange-ring carrying the spigot (20) to the end-flange (18).

7. A plastics lined pipe according to claim 1, wherein said main pipe (22) includes an outwardly, radially projecting end-flange (25) and said cylindrical spigot (23) is such as to be interposed between said main pipe (22) and said liner sleeve (7).

8. A plastics lined pipe according to claim 7, wherein each of a plurality of axially extending holes projects through said flange-ring (26) and said end-flange (25), each to accept a bolt for joining the pipe to another like pipe.

9. A plastics lined pipe according to claim 8, wherein each said bolt has a spacer (24) sleeved on it extending from the flange ring (26) to the end-flange (25).

10. A plastics lined pipe according to claim 1, wherein said cylindrical spigot (29) is such as to be inserted within said liner sleeve (28).

11.     A plastics lined pipe according to claim 10, wherein each of a plurality of axially extending holes projects through said flange-ring, each to accept a bolt for joining the pipe to another like pipe.

12.     A plastics lined pipe according to any one of claims 3, 5, 6, 8, 9 or 11, wherein said sealing surface is axially directed and such as to seal against a gasket washer sandwiched between itself and the sealing surface of a like lined pipe.

13.     A plastics lined pipe according to any one of claims 1, 2, 4, 7 or 10, wherein said sealing surface is radially outwardly directed and such as to seat against an encircling gasket ring (15).

FIG. 1.

FIG. 2a.

FIG. 2.

FIG. 3.

FIG. 4.